# EUROPEAN PATENT SPECIFICATION

(11) **EP 0 550 210 B1**
(45) Date of publication and mention of the grant of the patent: **19.03.1997**
(21) Application number: 92311460.7
(22) Date of filing: 15.12.1992
(51) Int. Cl.: C08L 77/00, C08L 71/12, C08K 5/00

(54) **Polyphenylene ether/polyamide compositions**
Polyphenylenether/Polyamid-Zusammensetzungen
Compositions de polyphénylène éther/polyamide

(30) Priority: 31.12.1991 US 815672
(43) Date of publication of application: 07.07.1993
(73) Proprietor: GENERAL ELECTRIC COMPANY, Schenectady, NY 12345 (US)
(72) Inventor: Yates, John Bennie, III, Glenmont, New York 12077 (US)
(74) Representative: Szary, Anne Catherine, Dr.

(56) References cited:
- EP-A- 0 362 439
- EP-A- 0 395 994
- EP-A- 0 529 378
- EP-A- 0 530 693
- EP-A- 0 534 196
- WO-A-87/05311

## Description

This invention relates to the general field of thermoplastic resins, and more particularly, to improved polyphenylene ether/polyamide blends.

Blends of polyamide and polyphenylene ether resin (the latter being sometimes referred to as "PPE" or "polyphenylene oxide") are well-known. These blends usually exhibit desirable properties of PPE, such as tensile strength and hydrolytic stability, while also exhibiting desirable properties of polyamides, such as solvent resistance. Furthermore, the addition of rubber-containing materials such as high impact polystyrene or styrene/butadiene block copolymers can impart good impact strength to the blends.

These PPE-polyamide compositions, which almost always also include some form of compatibilizing agent, are usually amenable to many different types of processing operations, such as extrusion, compression molding, and injection molding. Examples of molded parts prepared from these compositions are housings and other components used to make lawn-care equipment; as well as automotive parts such as doors and fenders.

There is a continuing search in this industrial area for PPE/polyamide blends which exhibit properties which surpass the properties of the known blends. For example, impact strength values must be increased for many end uses. Furthermore, high-speed molding operations require resin blends which must exhibit ever-increasing degrees of melt flow. An additional difficulty arises from the fact that these improvements must be made while other important properties are substantially maintained, such as tensile strength, heat resistance, and elongation characteristics.

A need thus exists for compatibilized PPE-polyamide compositions which exhibit excellent impact strength and melt flow characteristics, while substantially retaining other important properties, such as tensile strength, chemical resistance, and heat resistance.

### SUMMARY OF THE INVENTION

A new discovery has satisfied the requirements set forth above: an improved composition which comprises:
a) polyphenylene ether resin;
b) polyamide resin;
c) an effective amount of a compatibilizing agent for components (a) and (b); and
d) a linear, tapered, block copolymer.

Some embodiments of this invention can also include various elastomeric components, as further described below.

### DETAILED DESCRIPTION OF THE INVENTION

The PPE resins of component (a) are generally well-known in the art, and are described, for example, in U.S. Patents 3,306,874; 3,306,875; and 3,432,469 of Allan Hay; U.S. Patents 3,257,357 and 3,257,358 of Gelu Stamatoff; U.S. Patent 4,806,602 of Dwain M. White et al.; and U.S. Patent 4,806,297 of Sterling B. Brown et al., Both homopolymer and copolymer polyphenylene ethers are within the scope of this invention.

The preferred PPE resins are homo- and copolymers which comprise a plurality of structural units of the formula 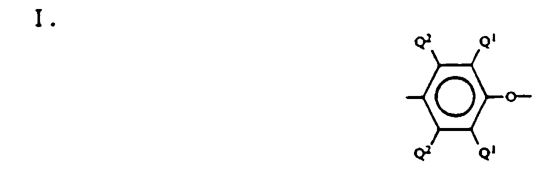 wherein each Q¹ is independently halogen, primary or secondary lower alkyl, phenyl, haloalkyl, aminoalkyl, hydrocarbonoxy, or halohydrocarbonoxy, wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹.

Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl, and the corresponding heptyl groups. Examples of secondary lower alkyl groups are isopropyl, sec-butyl and 3-pentyl. Preferably, any alkyl radicals are straight chain, rather than branched. Often, each Q¹ is alkyl or phenyl, especially C₁₋₄ alkyl, and each Q² is hydrogen. Especially preferred polyphenylene ethers will be comprised of units derived from 2,6-dimethyl phenol. Also preferred in some instances are PPE copolymers comprised of units derived from 2,6-dimethyl phenol and 2,3,6-trimethyl phenol.

This invention also includes within its scope PPE resins which contain certain moieties which modify properties such as molecular weight, melt viscosity, or impact strength. For example, vinyl monomers and vinylaromatic compounds may be grafted onto the PPE polymer, as described, for example, in the application of Sterling B. Brown et al., Attorney Docket Number RD-19372, U.S. Serial No. 351,903, filed May 15, 1989.

As another example, coupled PPE polymers may also be used, in which the coupling agent is reacted with hydroxy groups of two PPE chains to produce a higher molecular weight polymer.

The PPE resins of this invention generally have a weight average molecular weight of about 20,000 to 80,000, as determined by gel permeation chromatography.

Furthermore, they can be prepared by methods known in the art: for example, oxidative coupling of an appropriate monohydroxyaromatic compound in the presence of a catalyst based on copper, manganese, or cobalt.

The polyamides used for the present invention are generally well-known in the art; some are often alternatively referred to as "nylons". Many are described in U.S. Patents 4,873,276; 4,873,286; 4,997,612; and 5,000,897. The polyamides can be prepared by any known method, such as the polymerization of a monoamino-monocarboxylic acid or a lactam thereof having at least 2 carbon atoms between the amino and carboxylic acid group, of substantially equimolar proportions of a diamine which contains at least 2 carbon atoms between the amino groups and a dicarboxylic acid, or a monoaminocarboxylic acid or a lactam thereof as defined above, together with substantially equimolar proportions of a diamine and a dicarboxylic acid. The dicarboxylic acid may be used in the form of a functional derivative thereof, for example, an ester or an acid chloride. In addition to the patents mentioned above, polyamides and their precursors are also described in the following U.S. patents: 4,755,566 (Yates, III); 4,732,938 (Grant et al); 4,659,760 (van der Meer), and 4,315,086 (Ueno et al).

Specific examples of polyamides which are useful in the present invention are polyamide 6; polyamide 6,6; polyamide 11; polyamide 12; polyamide 6,3; polyamide 6,4; polyamide 4,6; polyamide 6/10; polyamide 6,12, as well as polyamides prepared from terephthalic acid and/or isophthalic acid and trimethylhexamethylenediamine; from adipic acid and m-xylylenediamines; from adipic acid, azelaic acid and 2,2bis-(p-aminocyclohexyl)propane, and from terephthalic acid and 4,4-diaminodicyclohexylmethane.

Mixtures and/or copolymers of two or more of the foregoing polyamides or prepolymers thereof, respectively, are also within the scope of the present invention.

The polyamide used may also be one or more of those referred to as "toughened nylons", which are often prepared by blending one or more polyamides with one or more polymeric or copolymeric elastomeric toughening agents. Examples of these types of materials are given in U.S. Pat. Nos. 4,174,358; 4,474,927, 4,346,194; 4,251,644; 3,884,882; 4,147,740; as well as in a publication by Gallucci et al, "Preparation and Reactions of Epoxy-Modified Polyethylene", J. APPL. POLY. SCI., V. 27, PP. 425-437 (1982).

A preferred polyamide in some embodiments of the present invention is one selected from the group consisting of polyamide 6; polyamide 6,6; polyamide 11; and polyamide 12; with polyamide 6,6 itself being especially preferred in some instances.

The weight ratio of PPE to polyamide may vary from 20:80 to 80:20, with a ratio in the range of 30:70 to 70:30 being preferred in some instances; and a weight ratio in the range of 40:60 to 60:40 often being most preferred.

Component (c) of this invention is a compound which improves the compatibility between the polyphenylene ether and polyamide resins. Improved compatibility is manifested by better processability, impact strength and/or elongation, or appearance, as compared to compositions without this component. These compounds are generally known in the art, and are usually either premixed with one of the base polymers or added separately to the composition at some point prior to or during blending.

Compatibilizing compounds suitable for use herein generally fall into the following categories:
(a) compounds which contain both (i) an ethylenic carbon-carbon double bond or a carbon-carbon triple bond and (ii) a carboxylic acid, acid anhydride, acid amide, imide, carboxylic ester, amine, or hydroxyl group;
(b) liquid diene polymers;
(c) epoxy compounds;
(d) polycarboxylic acids or derivatives thereof;
(e) an oxidized polyolefin wax;
(f) a compound containing an acyl functional group;
(g) a polyphenylene ether modified with a compound containing an acyl functional group;
(h) a compound containing an epoxytriazine group; or a polyphenylene ether modified with a compound containing an epoxytriazine group; and
(i) trialkylamine salts or tri-(aryl-substituted alkyl)amine salts.

Examples of subclass (a) compatibilizers are provided in the Ueno et al patent mentioned above (U.S. 4,315,086), and include, for example, maleic anhydride, maleic acid, fumaric acid, maleimide, maleic hydrazide, as well as reaction products of a diamine with these materials.

Examples of subclass (b) compatibilizers are also provided in the Ueno et al patent, and include, for example, homopolymers of a conjugated diene and copolymers of the conjugated diene and at least one member selected from the group consisting of other conjugated dienes, olefins, aromatic vinyl compounds, and acetylenic compounds. Specific examples include homopolymers of butadiene or of isoprene.

The epoxy compounds of subclass (c) include, for example, epoxy resins produced by condensing polyhydric phenols and epichlorohydrin in different proportions, as well as glycidyletherified products of monohydric phenols or monohydric alcohols. Ueno et al provides further examples of these types of materials.

In regard to subclass (d), the polycarboxylic acid or derivative thereof which is suitable for this invention is usually one represented by the formula

(R^{I}O)ₘR(COOR^{II})ₙ(CONR^{III}R^{IV})ₛ

or derivatives thereof wherein R is a linear or branched chain, saturated aliphatic hydrocarbon of from 2 to 20 carbon atoms; R^{I} is selected from the group consisting of hydrogen or an alkyl, aryl, acyl or carbonyl dioxy group of from 1 to 10 carbon atoms; each R^{II} is independently selected from the group consisting of hydrogen or an alkyl or aryl group of from 1 to 20 carbon atoms; each R^{III} and R^{IV} is independently selected from the group consisting of hydrogen or an alkyl or aryl group of from 1 to 10 carbon atoms; m is equal to 1 and (n+s) is greater than or equal to 2, and n and s are each greater than or equal to 0; and wherein (OR^{I}) is alpha or beta to a carbonyl group and at least 2 carbonyl groups are separated by 2 to 6 carbon atoms.

Preferred compounds of this type are citric acid, malic acid, agaricic acid, and salts or hydrates of any of these acids, as described in the above-mentioned U.S. Patent 4,873,286.

Acid esters, e.g., those derived from polycarboxylic acids, may also be used in this invention. Examples are acetyl citrate and mono- and distearyl citrates.

Acid amines may also be used, such as N,N'-diethyl citric acidamide.

Examples of suitable derivatives of the polycarboxylic acid are the salts thereof, including the salts with amines and, preferably, the alkali and alkaline metal salts. Illustrative salts include calcium malate, calcium citrate, potassium malate, and potassium citrate. The above-referenced Gallucci et al patent U.S. 4,873,286, describes many of these compounds.

Examples of subclass (e) are found in U.S. Pat. No. 4,659,760 issued to R. van der Meer, and incorporated herein by reference. One example is an oxidized polyethylene wax. Organic phosphites are sometimes used in conjunction with the wax.

Examples of subclass (f) are compounds described in U.S. Pat. Nos. 4,642,358 and 4,600,741, issued to D. Aycock et al, each of which is incorporated herein by reference. Nonlimiting examples include chloroformylsuccinic anhydride, chloroethanoylsuccinic anhydride, trimellitic anhydride acid chloride, 1-acetoxy acetyl-3,4-dibenzoic acid anhydride, and terephthalic acid acid chloride (i.e, the mono-acid chloride of terephthalic acid).

Examples of subclass (g) are also found in the Aycock et al patents mentioned above, and include the acyl functional-type compounds mentioned above which have been reacted with a portion of a PPE resin.

Examples of subclass (h) are compounds described in U.S. Patent 4,895,945, of S.B. Brown et al, the contents being incorporated herein by reference. Furthermore, the applications corresponding to Ser. Nos. 07/351,903 (filed 5/15/89) and 07/351,905 (filed 5/15/89) are generally relevant to these types of materials.

Furthermore, U.S. Patent 5,041,504, issued to S.B. Brown et al, describes compatibilized polyphenylene ether-polyamide copolymers prepared using these types of epoxytriazine compounds, such as 2-chloro-4,6-diglycidoxy-1,3,5-triazine (DGCC); 2-chloro-4-(n-butoxy)-6-glycidoxy-1,3,5-triazine (BGCC); and 2-chloro-4-(2,4,6-trimethylphenoxy)-6-glycidoxy-1,3,5-triazine (MGCC).

Examples of the compatibilizers of subclass (i) are the trialkylamine salt materials described in U.S. Patents 4,755,566 and 4,889,889, (J.B. Yates, III). These patents also teach the use of such compounds in preparing compatibilized PPE-polyamide materials. Salts of maleic or fumaric acid are usually preferred. Trialkylammonium maleates or trialkylammonium fumarates are particularly preferred, such as triethylammonium fumarate and tri-n-butylammonium fumarate; although triaryl salts such as tribenzylammonium fumarate are also sometimes preferred for certain embodiments.

Component (d) of this invention is a tapered linear block copolymer, and generally comprises blocks of A¹ and B¹, wherein A¹ is a polymerized vinyl aromatic hydrocarbon block, and B¹ is a hydrogenated, partially hydrogenated, or non-hydrogenated block derived from at least one polymerized conjugated diene. These materials are also described in a copending application of common assignment, S.N. 07/589,871 (Attorney Docket 8CN-8537), filed on September 28, 1990.

Those of ordinary skill in the polymer arts understand the concept of "tapering". Furthermore, techniques for achieving tapered polymers or copolymers are well-known in the art. Examples of references which relate to tapered polymers are U.S. Patents 4,948,832; 4,939,207; 4,918,145; 4,914,248; 4,913,971; and 4,116,917. Component (d) usually contains 50% by weight to 90% by weight vinyl aromatic polymer, based on the total weight of the component. In preferred embodiments, 70% by weight to 80% by weight vinyl aromatic polymer is present. The weight-average molecular weight of the entire copolymer is preferably from 90,000 to 270,000, and most preferably, in the range of 110,000 to 150,000.

The vinyl aromatic polymer of component (d) is preferably in a form which includes both random and block structural units, with the weight ratio of random to block usually being in the range of 1.5:1 to 4:1, and more preferably, within the range of 2.5:1 to 3:1. Some of the suitable materials of this type contain a block of the vinyl aromatic polymer having a molecular weight of 10,000 to 30,000, followed by a block of the polymerized conjugated diene having a molecular weight of 25,000 to 65,000, which itself is linked to a random block of vinyl aromatic-conjugated diene polymer (for example, a random block of styrene-butadiene), having a molecular weight of 30,000 to 50,000. The random block may be attached at its opposite end to another vinyl aromatic polymeric block, usually having a molecular weight of 30,000 to 50,000.

In some preferred embodiments, the A¹ block of component (d) is derived from a monomer selected from the group consisting of styrene, alpha-methyl styrene, para-methyl styrene, vinyl toluene, vinyl xylene, and combinations of such monomers. The B¹ block is preferably derived from a monomer selected from the group consisting of butadiene, isoprene, ethylene, butylene, 1,3-pentadiene, 2,3-dimethyl butadiene, and combinations thereof. It is also possible that component (d) can contain more than one type of A¹ and/or B¹ block.

Tapered linear styrene-butadiene-styrene (SBS) "triblock" copolymers falling within the molecular weight ranges described above are especially suitable for use as component (d). An example of such a material is FINACLEAR™ 520, a commercially available product available from Fina Oil and Chemical Company. A suitable level of component (d) depends on several factors, such as the end use of the product, the level of impact strength desired, and the particular type and characteristics of other components which are present.

Usually, 1% by weight to 20% by weight of component (d) is used, based on the weight of the entire composition. Preferably, the level is 5% by weight to 15% by weight.

In some embodiments, compositions of the present invention are further enhanced by the inclusion of an elastomeric material, such as elastomeric block copolymers and mixtures thereof. They are usually used at levels ranging from 1% by weight to 30% by weight, based on the weight of the entire composition, as further described below.

Examples of suitable materials include various diblock or triblock copolymers characterized by an A-B, A-B-A', or (A-B)ₘ-X structure, or mixtures of these structures, wherein A and A' are each polymerized vinyl aromatic hydrocarbon blocks, each B is derived from at least one polymerized conjugated diene, X is the radical of a multifunctional coupling agent, and m is an integer of at least 2. These types of materials are well-known in the art, and frequently comprise blocks of polystyrene and either polyisoprene or polybutadiene. The polybutadiene or polyisoprene may be completely-, partially-, or non-hydrogenated. Some examples of suitable block copolymers are provided in U.K. Patent No. 1,264,741, and in U.S. Patents 3,078,254; 3,149,182; 3,231,635; 3,265,765; 3,287,333; 3,297,793; 3,462,162; 3,594,452; 3,595,942; 3,694,523; 3,842,029; 4,402,159; 4,755,566; 4,874,810; 4,889,889; 4,900,786; and 4,935,472;

Some specific examples of block copolymers are: polystyrene-polybutadiene; polystyrene-polyisoprene; polystyrene-polybutadiene-polystyrene; and polystyrene-polyisoprene-polystyrene. As mentioned above, hydrogenated versions of these materials are also possible, e.g., styrene-(ethylene-butylene)-styrene block copolymers, styrene-(ethylene-propylene) block copolymers, and the like.

Another type of elastomeric material which may be included in these compositions is a radial teleblock copolymer which contains segments or "blocks" which themselves comprise a conjugated diene polymer, vinyl aromatic polymer blocks, and a coupling agent. These materials are sometimes referred to as "branched" polymers, and are known in the art. For example, they are generally described in U.S. Patent 4,097,550; ADHESIVES AGE, Marrs et al, December, 1971, pp 15-20; and in RUBBER WORLD, Haws et al, January, 1973, pp 27-32.

Usually, several chains of the diene polymer (often three or more) extend from a coupling agent, with each chain terminating at its other end with a block of the vinyl aromatic polymer. Examples of conjugated dienes which may be used to form the radial teleblock copolymer are 1,3-butadiene; isoprene; 2,3-dimethyl-1,3-butadiene; 1,3-pentadiene; 3-butyl-1,3-octadiene; and mixtures of these dienes, with 1,3-butadiene being most preferred.

The vinyl aromatic polymer for the radial teleblock material is usually prepared from compounds such as those designated by Formula I (Column 2) of U.S. Patent 4,097,550, mentioned above. Examples of such compounds are styrene, chlorostyrene, vinyl toluene, 3-methylstyrene, 4-n-propylstyrene, 4-cyclohexylstyrene, 4-dodecylstyrene, 2-ethyl-4-benzylstyrene, 4-p-tolylstyrene, 4-(4-phenyl-n-butyl)styrene, 1-vinylnaphthalene, 2-vinylnaphthalene, as well as other alkyl, cycloalkyl, aryl, alkaryl, and aralkyl derivatives of any of these compounds. Furthermore, mixtures and/or copolymers of any of these compounds may be used to form the vinyl aromatic polymer.

The molecular weight of the radial teleblock copolymer is not especially critical, and preferably ranges from 100,000 to 350,000. It also preferably comprises from 1 to 50 parts by weight vinyl aromatic compound, and from 99 to 50 parts by weight conjugated diene, based on the weight of the entire teleblock copolymer.

Various factors are to be considered in selecting an appropriate amount of coupling agent, such as the type of agent used, and the amount of organometallic initiator employed (the latter mentioned further below). Usually, relatively small amounts of coupling agent are preferred, for example, from 0.1 to 1.0 parts by weight per 100 parts of resin.

Radial teleblock copolymers for the present invention are available commercially. They can also be prepared by techniques known in the art. For example, they can be made by polymerizing conjugated dienes (e.g., butadiene) and vinyl aromatic compounds, e.g., styrene, in the presence of an organometallic initiator such as n-butyllithium, thereby producing copolymers which contain an active metal atom such as lithium on one end of each of the polymer chains. These metal atom-terminated polymers can then be reacted with a coupling agent which has at least three active sites capable of reacting with the carbon-metal atom bonds on the polymer chains, and replacing the metal atoms on the chains. This results in polymers which have relatively long branches which radiate from a nucleus formed by the polyfunctional coupling agent. The teachings of U.S. Patent No. 3,281,383, issued to Zelinski et al, describe such a method of preparation.

The coupling agents for the radial teleblock copolymers can be chosen from among polyepoxides, polyisocyanates, polyimines, polyaldehydes, polyketones, polyanhydrides, polyesters, polyhalides, and the like. These materials can contain two or more types of functional groups, such as the combination of epoxy and aldehyde groups, or isocyanate and halide groups, as also described in the above-referenced Zelinski et al patent. Some preferred embodiments of this invention call for a radial teleblock copolymer of styrene and butadiene, with terminal blocks derived from styrene, and a coupling agent selected from epoxidized polybutadiene, SiCl₄, or mixtures thereof. Examples of preferred epoxidized polybutadiene coupling agents are those designated commercially as Oxiron 2000 and Oxiron 2001.

Sometimes, the radial teleblock materials can be extended or diluted with mineral oil; e.g., light mineral oil. These extenders can comprise up to about 60% by weight of the radial teleblock material.

Commercial examples of radial teleblock copolymers suitable for this invention are the FINAPRENE® products, Grades 401, 411, 414, 416, and 417, available from Fina Oil Company.

The amount of elastomeric material employed in compositions of the-present invention depends on several factors, such as the particular monomers employed, as well as the desired level of various properties (for example, impact strength) for end products. Usually, 1% by weight to 30% by weight of elastomer is used, based on the weight of the entire composition. In more preferred embodiments, 5% by weight to 15% by weight is used.

Various additives which impart or enhance a variety of characteristics are sometimes included in the compositions described herein. Illustrative additives are flame retardants, drip retardants, dyes, pigments, colorants, lubricants, reinforcing agents, fillers, antistatic agents, heat stabilizers, ultraviolet light stabilizers, and plasticizers. Effective amounts of such additives are usually in the range, for each, of from 0.1% by weight to 50% by weight, based on the weight of the entire composition.

The compositions described herein can be prepared by conventional procedures well-known in the art. For example, the components mentioned above can be combined by any technique which results in an intimate blend. These techniques often involve the use of an extruder, which provides a substantial shearing force. Extruders which permit the addition of all of the ingredients through one port may be employed, or alternatively, those which contain multiple ports may be used. As an illustration, the PPE, tapered block copolymer, compatibilizing agent, and any other ingredients may be added through the upstream port of a suitable extruder, while the polyamide is added through a downstream port. The extruder is sometimes vacuum-vented. Extrusion temperatures can be determined without undue experimentation by those skilled in processing thermoplastics, and are usually in the range of 280°C to 350°C.

The compositions described above generally possess an unusual combination of properties, in melt form, and in the form of molded articles. Some of these properties are excellent tensile elongation, high melt flow, excellent chemical resistance and tensile strength, and good impact strength. The examples which follow illustrate some of the characteristics of the present invention.

### EXAMPLES

The following materials were used in these examples, unless otherwise indicated:

PPE (Component a): This resin was poly(2,6-dimethyl-1,4-phenylene ether), having an intrinsic viscosity in chloroform at 25°C of 0.46 dl./g.

POLYAMIDE (Component b): The polyamide employed was nylon 6,6.

COMPATIBILIZER (Component c): The compatibilizers for Example 1 were citric acid and fumaric acid, as indicated in Table 1. The compatibilizers for the other examples are indicated below.

TAPERED, LINEAR BLOCK COPOLYMER (Component d): The material used was a styrene-butadiene-styrene block copolymer commercially available as Finaclear™ 520 (and sometimes referred to as Finaprene® 520), from Fina Oil & Chemical Company. The material contains about 27% butadiene and 73% by weight polystyrene (about 56% in block form, and 17% randomly linked to the butadiene). The weight-average molecular weight (absolute) of the copolymer is about 120,000 to 130,000, while the number-average molecular weight (absolute) is in the range of about 100,000 to 105,000. One polystyrene end block has a weight average molecular weight of about 25,000, while the other polystyrene end block has a molecular weight average of about 40,000 to 47,000.

Other relevant properties for Finaprene® 520 are as follows:
Melt Flow Index (g/10 min., via ASTM 0-1238, Condition G): 7.5
Tensile Strength (ASTM D-638):(3,000 psi) 20.7 MPa
Elongation (D-638): 200%
Flexural Modulus (ASTM D-790):(175 Mpsi) 1207.5 MPa
Izod Impact (ASTM D-256A, unnotched):(15 ft lb/in) 799.5 J/m
Gardner Impact (ASTM D-3029):(150 in-lb) 16.5 Nm

HIGH IMPACT POLYSTYRENE (HIPS): Butadiene-modified homopolystyrene, having a rubber content of about 10.5% by weight.

BLOCK COPOLYMER: The impact modifier used in the samples was an unsaturated styrene-butadiene-styrene linear block copolymer, KRATON®D 1102.

The compositions were prepared by dry-blending and compounding the components, using a 30mm Werner & Pfleiderer twin-screw extruder. The polyamide was added by way of a downstream port. Component levels are expressed in parts by weight (pbw), unless otherwise indicated.

The extrudate was quenched and pelletized, and the products were then molded into test specimens, using a Toshiba injection molding machine.

### EXAMPLE 1

The Base Composition for this example contained the following:

| | |
|---|---|
| PPE | 36 pbw |
| Polyamide | 39 pbw |
| KRATON®D 1102 | 9 pbw |

Samples 1 and 2 used citric acid as a compatibilizer, at 0.6 pbw, while samples 3 and 4 used fumaric acid as a compatibilizer, at 0.4 pbw (molar amounts are substantially equivalent).

The remainder of the composition constituted either HIPS or the linear, tapered block copolymer of the present invention, as shown in the table, each at a level of 15 pbw. The compositions were prepared as described above. Tests on molded pieces (using conventional ASTM procedures) resulted in the properties also set forth in Table 1:

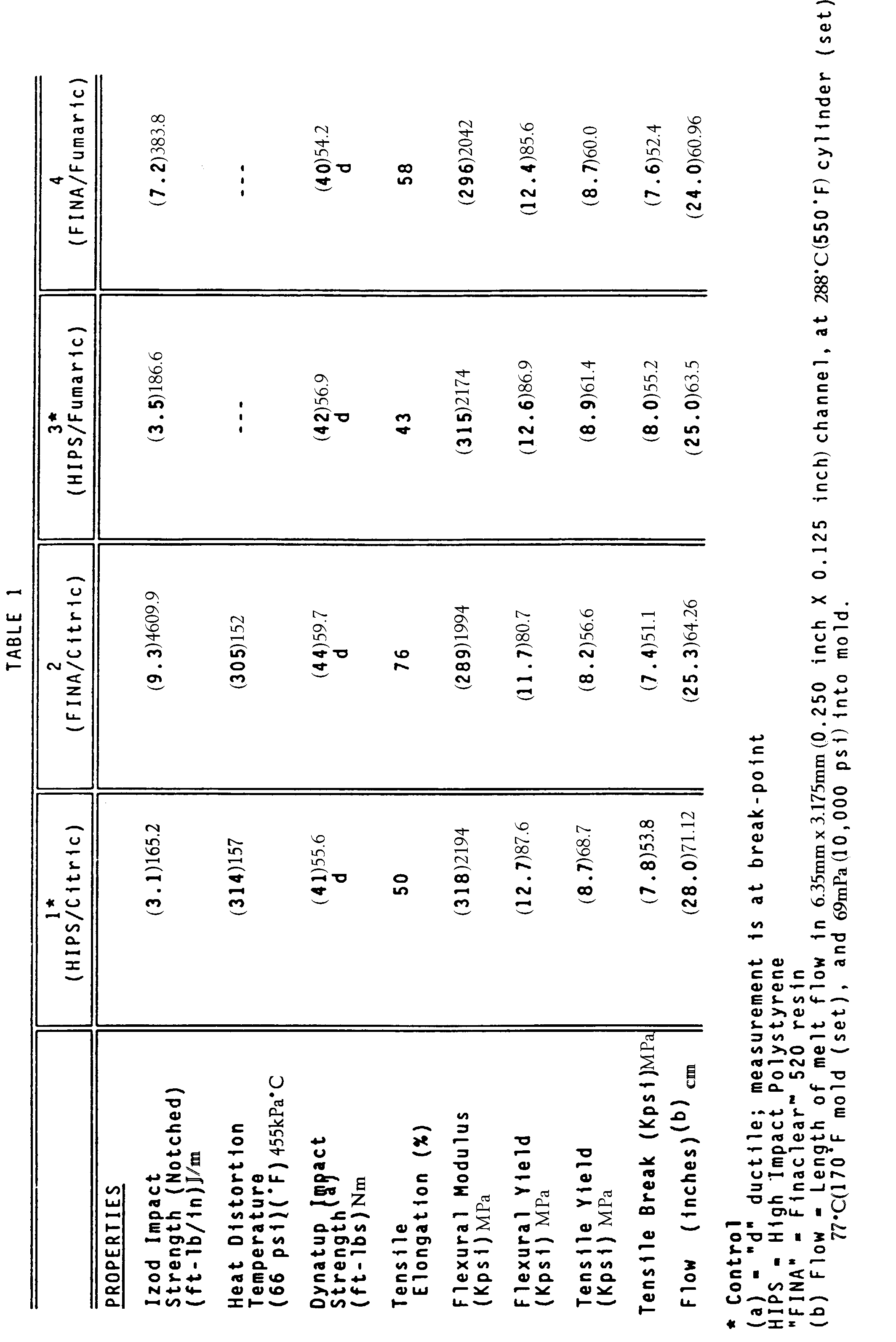

Table 1 clearly demonstrates that the use of the linear, tapered block copolymers of the present invention in place of HIPS results in large increases in Izod impact strength, as well as significant increases in elongation characteristics. While flexural modulus is decreased to a relatively small degree, those values are still very good.

### EXAMPLE 2

The benefits of the compositions of this invention are further demonstrated here, using several other compatibilizing agents. The base composition was identical to that of Example 1, and prepared in the same manner.

The compatibilizing agents employed were as follows:

Samples 5 and 6: PPE modified with about 1-2% by weight of an acyl-functional compound ("Acyl" in table), as described in U.S. Patent 4,600,741, mentioned above, at a level of 18 pbw.

Samples 7 and 8: PPE modified with about 2% by weight of a chloroepoxytriazine ("Epoxy" in table) compound, as described in the above-mentioned U.S. Patents 4,895,945 and 5,041,504, at a level of 18 pbw.

Comparative samples 5 and 7 contained 15 pbw of HIPS, while samples 6 and 8 of this invention utilized Finaclear™ 520 resin in place of the HIPS, at the same level.

Testing of the compositions was carried out as in Example 1; and the results are shown below in Table 2:

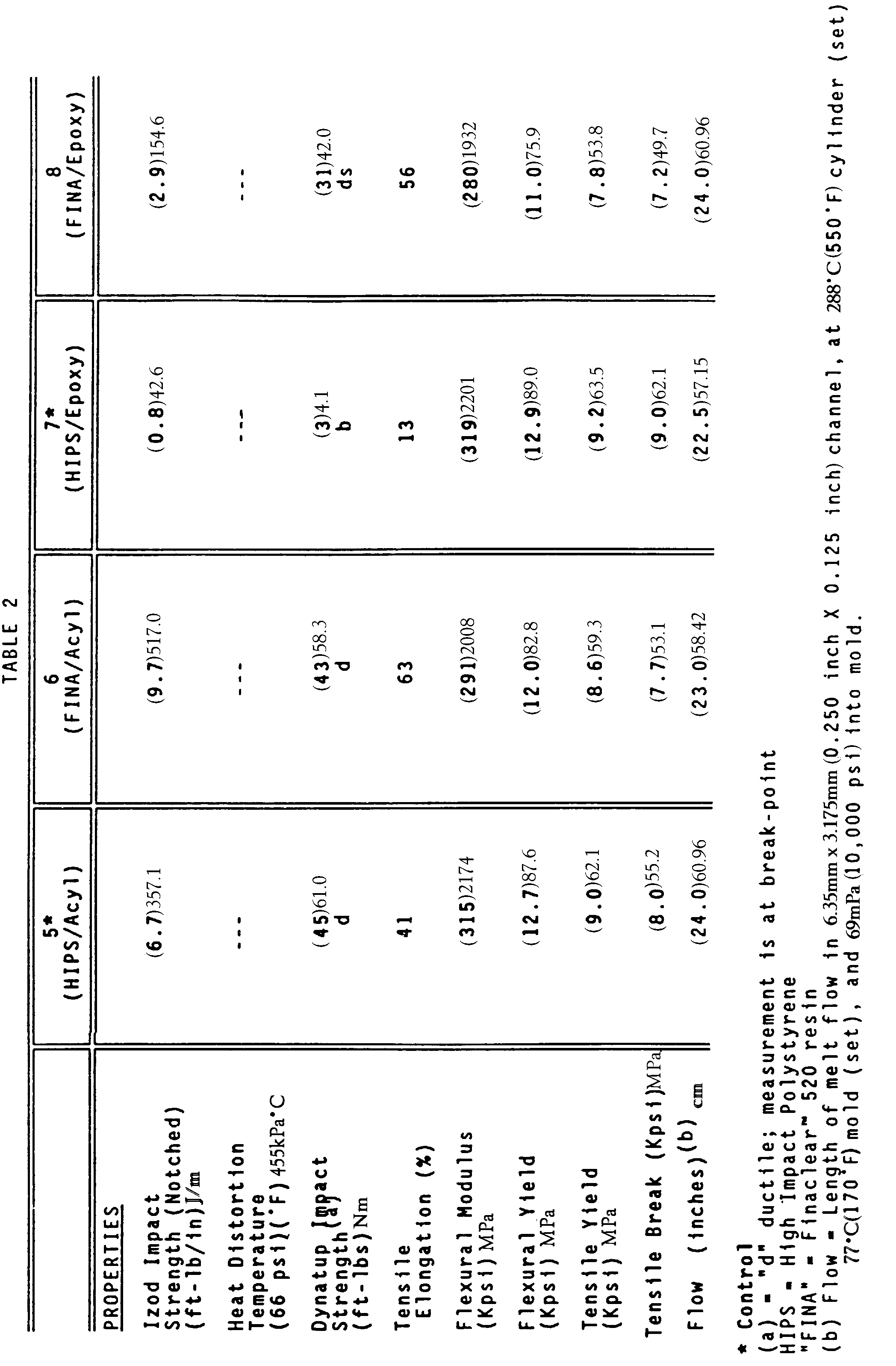

The data in Table 2 again clearly demonstrate the benefits of this invention, as shown, for example, by the much-improved Izod impact and tensile elongation values, regardless of what compatibilizing agent is used. Flexural modulus values, while decreased slightly, were still very good.

## Claims

1. A thermoplastic composition comprising:
a) polyphenylene ether resin;
b) polyamide resin;
c) an effective amount of a compatibilizing agent for components (a) and (b); and
d) a linear, tapered, block copolymer.

2. The composition of claim 1, wherein the polyphenylene ether comprises a plurality of structural units of the formula: 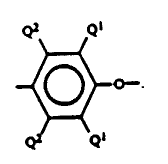 wherein each Q¹ is independently halogen, primary or secondary lower alkyl, phenyl, haloalkyl, aminoalkyl, hydrocarbonoxy, or halohydro-carbonoxy, wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹.

3. The composition of claim 1 or claim 2, wherein the polyphenylene ether is poly(2,6-dimethyl-1,4-phenylene ether).

4. The composition of claim 1 or claim 2, wherein the polyphenylene ether is derived from a monomer selected from the group consisting of 2,6-dimethyl phenol; 2,3,6-trimethyl phenol, and mixtures thereof.

5. The composition of any preceding claim, wherein the polyamide is selected from the group consisting of polyamide 6; polyamide 6,6; polyamide 11; polyamide 12; polyamide 6,3; polyamide 6,4; polyamide 4,6; polyamide 6/10; polyamide 6,12; mixtures of any of the foregoing; and copolymers of any of the foregoing.

6. The composition of any preceding claim, wherein the compatibilizing agent of component (c) is selected from the group consisting of:
i) compounds which contain both (I) an ethylenic carbon-carbon double bond or a carbon-carbon triple bond and (II) a carboxylic acid, acid anhydride, acid amide, imide, carboxylic ester, amine, or hydroxyl group;
(ii) liquid diene polymers;
(iii) epoxy compounds;
(iv) polycarboxylic acids or derivatives thereof;
(v) an oxidized polyolefin wax;
(vi) a compound containing an acyl functional group;
(vii) a polyphenylene ether modified with a compound containing an acyl functional group;
(viii) a compound containing an epoxytriazine group; or a polyphenylene ether modified with a compound containing an epoxytriazine group; and
(ix) trialkylamine salts or tri-(aryl-substituted alkyl) amine salts.

7. The composition of claim 6, wherein the compatibilizing agent is selected from the group consisting of maleic hydrazide, maleic anhydride, maleic acid, fumaric acid, and maleimide.

8. The composition of claim 6, wherein the compatibilizing agent is selected from the group consisting of chloroformylsuccinic anhydride; trimellitic anhydride acid chloride; polyphenylene ether modified with trimellitic anhydride acid chloride; terephthalic acid acid chloride; 2-chloro-4,6-diglycidoxy-1,3,5-triazine; 2-chloro-4-(n-butoxy)-6-glycidoxy-1,3,5-triazine; and 2-chloro-4-(2,4,6-trimethylphenoxy)-6-glycidoxy-1,3,5-triazine .

9. The composition of claim 6, wherein the polycarboxylic acid or derivative thereof (subcomponent (iv)) is selected from the group consisting of malic acid, citric acid, salts of either acid, and hydrates of either acid.

10. The composition of any preceding claim, wherein the tapered block copolymer (component d) comprises blocks of A¹ and B¹, wherein A¹ is at least one polymerized vinyl aromatic hydrocarbon block, and B¹ is a hydrogenated, partially hydrogenated, or non-hydrogenated block derived from at least one polymerized conjugated diene.

11. The composition of claim 10, wherein the A¹ block is derived from a monomer selected from the group consisting of styrene, alpha-methyl styrene, para-methyl styrene, vinyl toluene, vinyl xylene, and mixtures of such monomers.

12. The composition of claim 10, wherein the B¹ block is derived from a monomer selected from the group consisting of butadiene, isoprene, ethylene, butylene, 1,3-pentadiene, 2,3-dimethyl butadiene, and combinations thereof.

13. The composition of any preceding claim, wherein the amount of component (d) present is in the range of 1% by weight to 20% by weight, based on the weight of the entire composition.

14. The composition of any preceding claim wherein the amount of component (d) present is in the range of 5% by weight to 15% by weight.

15. The composition of any preceding claim, wherein the weight ratio of component (a) to component (b) ranges from 70:30 to 30:70.

16. The composition of any preceding claim, further comprising an elastomeric material.

17. The composition of claim 16 wherein the elastomeric material is a block copolymer characterized by an A-B, A-B-A', or (A-B)ₘ-X structure, or mixtures of these structures, wherein A and A' are each polymerized vinyl aromatic hydrocarbon blocks, each B is derived from at least one polymerized conjugated diene, X is the radical of a multifunctional coupling agent, and m is an integer of at least 2.

18. The composition of claim 17, wherein the elastomeric material comprises blocks of styrene and either polybutadiene or polyisoprene, and is either hydrogenated, partially hydrogenated, or non-hydrogenated.

19. The composition of claim 18, wherein the elastomeric material is either a styrene-butadiene-styrene block copolymer; a styrene-(ethylene-propylene) block copolymer; or a styrene-(ethylene-butylene)-styrene block copolymer.

20. The composition of any preceding claim, further comprising effective amounts of at least one additive selected from the group consisting of flame retardants, plasticizers, stabilizers, antistatic agents, fillers, reinforcing agents, lubricants, colorants, dyes, pigments, and drip retardants.

21. A thermoplastic composition comprising:
I) a compatibilized blend of polyphenylene ether resin and polyamide resin;
II) a linear, tapered block copolymer;
III) an elastomer selected from the group consisting of styrene-butadiene-styrene block copolymers; styrene-(ethylene-propylene) block copolymers; and styrene-(ethylene-butylene)-styrene block copolymers.

22. The composition of claim 21, wherein the polyphenylene ether is derived from a monomer selected from the group consisting of 2,6-dimethyl phenol; 2,3,6-trimethyl phenol; and mixtures thereof;
wherein the polyamide is selected from the group consisting of polyamide 6; polyamide 6,6; polyamide 11; polyamide 12; polyamide 6,3; polyamide 6,4; polyamide 4,6; polyamide 6/10; polyamide 6,12; mixtures of any of the foregoing; and copolymers of any of the foregoing;
and wherein the blend is compatibilized by the use of an agent selected from the group consisting of liquid diene polymers; epoxy compounds; oxidized polyolefin wax; trimellitic anhydride acid chloride; chloroformylsuccinic anhydride; and terephthalic acid acid chloride; malic acid; salts or hydrates of malic acid; citric acid; salts or hydrates of citric acid; fumaric acid, maleimide, maleic hydrazide, maleic anhydride, maleic acid; 2-chloro-4,6-diglycidoxy-1,3,5-triazine; 2-chloro-4-(n-butoxy)-6-glycidoxy-1,3,5-triazine; and 2-chloro-4-(2,4,6-trimethylphenoxy) -6-glycidoxy-1,3,5-triazine; and trialkylamine salts or tri-(aryl-substituted alkyl)amine salts of maleic or fumaric acid.

23. The composition of claim 21 or claim 22, further comprising a radial teleblock copolymer.

24. A thermoplastic composition comprising :
a) polyphenylene ether resin;
b) polyamide resin, said polyphenylene ether resin and said polyamide resin being present in said composition in a ratio of polyphenylene ether resin to polyamide resin of from 20:80 to 80:20;
c) an effective amount of a compatibilizing agent for components (a) and (b); and
d) a linear tapered block copolymer present at from 1% by weight to 20% by weight based on the weight of the entire composition, said linear, tapered, block copolymer comprising a first polymeric vinyl aromatic end block unit, a second polymeric vinyl aromatic end block unit, said first and second end block units having there between a polymeric vinyl aromatic-conjugated diene random unit and a polymeric conjugated-diene block unit.

25. The composition of claim 25 wherein said composition consists essentially of said polyphenylene ether resin, said polyamide resin, said compatibilizing agent and said linear tapered block copolymer.

26. The composition of claim 1 wherein said linear tapered block copolymer comprises a first polymeric vinyl aromatic end block unit, and a second polymeric vinyl aromatic end block unit, wherein said first and second end block units having there between a polymeric vinyl aromatic-conjugated diene random unit and a polymeric conjugated-diene block unit.

## Patentansprüche

1. Eine thermoplastische Zusammensetzung, umfassend:
a) Polyphenylenätherharz;
b) Polyamidharz;
c) eine wirksame Menge eines verträglichmachenden Mittels für die Komponenten (a) und (b); und
d) ein lineares, getapertes Blockcopolymer.

2. Die Zusammensetzung nach Anspruch 1, worin der Polyphenylenäther eine Vielzahl von Struktureinheiten der Formel 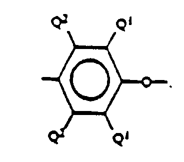 umfaßt, worin jedes Q¹ unabhängig Halogen, primäres oder sekundäres niederes Alkyl, Phenyl, Halogenalkyl, Aminoalkyl, Hydrocarbonoxy oder Halogenhydrocarbonoxy, worin wenigstens zwei Kohlenstoffatome die Halogen- und Sauerstoffatome trennen, ist; und jedes Q² unabhängig Wasserstoff, Halogen, primäres oder sekundäres niederes Alkyl, Phenyl, Halogenalkyl, Hydrocarbonoxy oder Halogenhydrocarbonoxy wie für Q¹ definiert, ist.

3. Die Zusammensetzung nach Anspruch 1 oder 2, worin der Polyphenylenäther Poly(2,6-dimethyl-1,4-phenylenäther) ist.

4. Die Zusammensetzung nach Anspruch 1 oder 2, worin der Polyphenylenäther aus einem Monomer abgeleitet ist, das aus der Gruppe bestehend aus 2,6-Dimethylphenol; 2,3,6-Trimethylphenol und Mischungen derselben ausgewählt wird.

5. Die Zusammensetzung nach einem der vorhergehenden Ansprüche, worin das Polyamid aus der Gruppe bestehend aus Polyamid 6; Polyamid 6,6; Polyamid 11; Polyamid 12; Polyamid 6,3; Polyamid 6,4; Polyamid 4,6; Polyamid 6/10; Polyamid 6,12; Mischungen von jedem beliebigen der Vorstehenden und Copolymeren von jedem beliebigen der Vorstehenden ausgewählt ist.

6. Die Zusammensetzung nach einem der vorhergehenden Ansprüche, worin das verträglichmachende Mittel von Komponente (c) ausgewählt ist aus der Gruppe bestehend aus:
i) Verbindungen, die sowohl (I) eine ethylenische Kohlenstoff-Kohlenstoff Doppelbindung oder eine Kohlenstoff-Kohlenstoff Dreifachbindung als auch (II) eine Carbonsäure, Säureanhydrid, Säureamid, Imid, Carbonester, Amin oder Hydroxylgruppe enthalten;
(ii) flüssigen Dienpolymeren;
(iii) Epoxyverbindungen;
(iv) Polycarbonsäuren oder Derivatenderselben;
(v) einem oxidierten Polyolefinwachs;
(vi) einerVerbindung, die eine Acyl funktionelle Gruppe enthält;
(vii) einem Polyphenylenäther, der mit einer Verbindung, die eine Acyl funktionelle Gruppe enthält, modifiziert ist;
(viii) einer Verbindung, die eine Epoxytriazingruppe enthält; oder einen Polyphenylenäther,der mit einer Verbindung, die eine Epoxytriazingruppe enthält, modifiziert ist; und
(ix) Trialkylaminsalzen oder Tri-(Aryl-substituierten Alkyl)-Aminsalzen.

7. Die Zusammensetzung nach Anspruch 6, worin das verträglichmachende Mittel aus der Gruppe bestehend aus Maleinhydrazid, Maleinsäureanhydrid, Maleinsäure, Fumarsäure und Maleimid ausgewählt ist.

8. Die Zusammensetzung nach Anspruch 6), worin das verträglichmachende Mittel ausgewählt ist aus der Gruppe bestehend aus Chloroformylsuccinsäureanhydrid; Trimellithanhydridsäurechlorid; Polyphenylenäther, modifiziert mit Trimellithanhydridsäurechlorid; Terephthalsäuresäurechlorid; 2-Chlor-4,6-diglycidoxy-1,3,5-triazin; 2-Chlor-4-(n-butoxy)-6-glycidoxy-1,3,5-triazin; und 2-Chlor-4-(2,4,6-trimethylphenoxy)-6-glycidoxy-1,3,5-triazin.

9. Die Zusammensetzung nach Anspruch 6, worin die Polycarbonsäure oder Derivate derselben (Unterkomponente (iv)) ausgewählt ist aus der Gruppe bestehend aus Apfelsäure, Zitronensäure, Salzen von jeder der Säuren und Hydraten von jeder der Säuren.

10. Die Zusammensetzung nach einem der vorhergehenden Ansprüche, worin das getaperte Blockcopolymer (Komponente d) Blöcke von A¹ und B¹ umfaßt, worin A¹ wenigstens ein polymerisierter vinylaromatischer Kohlenwasserstoffblock ist und B¹ ein hydrierter, teilweise hydrierter oder nicht-hydrierter Block ist, der von wenigstens einem polymerisierten konjugierten Dien abgeleitet ist.

11. Die Zusammensetzung nach Anspruch 10, worin der A¹-Block von einem Monomeren abgeleitet ist, das aus der Gruppe bestehend aus Styrol, Alpha-Methylstyrol, Para-Methylstyrol, Vinyltoluol, vinylxylol und Mischungen solcher Monomere ausgewählt ist.

12. Die Zusammensetzung nach Anspruch 10, worin der B¹-Block von einem Monomeren abgeleitet ist, das aus der Gruppe bestehend aus Butadien, Isopren, Ethylen, Butylen, 1,3-Pentadien, 2,3-Dimethylbutadien und Kombinationen derselben augewählt ist.

13. Die Zusammensetzung nach einem der vorhergehenden Ansprüche, worin die Menge der anwesenden Komponente (d) im Bereich von 1 Gewichts-% bis 20 Gewichtsprozent, bezogen auf das Gewicht der gesamten Zusammensetzung,liegt.

14. Die Zusammensetzung nach einem der vorhergehenden Ansprüche, worin die Menge der anwesenden Komponente (d) im Bereich von 5 Gewichts-% bis 15 Gewichts-% liegt.

15. Die Zusammensetzung nach einem der vorhergehenden Ansprüche, worin das Gewichtsverhältnis der Komponente (a) zur Komponente (b) von 70:30 bis 30:70 reicht.

16. Die Zusammensetzung nach einem der vorhergehenden Ansprüche, weiter ein elastomeres Material umfassend.

17. Die Zusammensetzung nach Anspruch 16, worin das elastomere Material ein Blockcopolymer, gekennzeichnet durch eine A-B,A-B-A' oder (A-B)ₘ-X-Struktur oder Mischungen dieser Strukturen, ist,worin A und A' jeweils polymerisierte vinylaromatische Kohlenwasserstoffblöcke sind, jedes B von wenigstens einem polymerisierten konjugierten Dien abgeleitet ist, X der Rest eines multifunktionellen Kupplungsmittels ist und m eine ganze Zahl von wenigstens 2 ist.

18. Die Zusammensetzung nach Anspruch 17, worin das elastomere Material Blöcke von Styrol und entweder Polybutadien oder Polyisopren umfaßt und entweder hydriert, teilweise hydriert oder nicht-hydriert ist.

19. Die Zusammensetzung nach Anspruch 18, worin das elastomere Material entweder ein Styrol-Butadien-Styrol-Blockcopolymer; ein Styrol-(Ethylen-Propylen)-Blockcopolymer oder ein Styrol-(Ethylen-Butylen)Styrol-Blockcopolymer ist.

20. Die Zusammensetzung nach einem der vorhergehenden Ansprüche, weiter umfassend wirksame Mengen von wenigstens einem Additiv, das aus der Gruppe bestehend aus Flammhemmern, Weichmachern, Stabilisatoren, antistatischen Mitteln, Füllstoffen, Verstärkungsmitteln, Schmierstoffen, Farbmitteln, Farbstoffen, Pigmenten und Tropfhemmern ausgewählt ist.

21. Eine thermoplastische Zusammensetzung, umfassend:
I) eine verträglichgemachte Mischung von Polyphenylenätherharz und Polyamidharz;
II) ein lineares, getapertes Blockcopolymer;
III) ein Elastomer, ausgewählt aus der Gruppe bestehend aus Styrol-Butadien-Styrol-Blockcopolymeren; Styrol-(Ethylen-Propylen)-Blockcopolymeren und Styrol-(Ethylen-Butylen)-Styrol-Blockcopolymeren.

22. Die Zusammensetzung nach Anspruch 21, worin der Polyphenylenäther aus einem Monomer abgeleitet ist, das aus der Gruppe bestehend aus 2,6-Dimethylphenol; 2,3,6-Trimethylphenol und Mischungen derselben ausgewählt ist;worin das Polyamid aus der Gruppe bestehend aus Polyamid 6; Polyamid 6,6; Polyamid 11; Polyamid 12; Polyamid 6,3; Polyamid 6,4; Polyamid 4,6; Polyamid 6/10; Polyamid 6,12; Mischungen von jedem beliebigen der Vorstehenden und Copolymeren von jedem der Vorstehenden ausgewählt ist; und worin die Mischung durch die Verwendung eines Mittels verträglich gemacht worden ist, das aus der Gruppe bestehend aus flüssigen Dienpolymeren; Epoxyverbindungen; oxidiertem Polyolefinwachs;Trimellithanhydridsäurechlorid;Chloroformylsuccinsäureanhydrid;und Terephthalsäuresäurechlorid; Apfelsäure; Salzen oder Hydraten der Apfelsäure; Zitronensäure; Salzen oder Hydraten der Zitronensäure; Fumarsäure, Maleimid, Maleinhydrazid, Maleinsäureanhydrid, Maleinsäure; 2-Chlor-4,6-diglycidoxy-1,3,5-triazin; 2-Chlor-4-(n-butoxy)-6-glycidoxy-1,3,5-triazin und 2-Chlor-4-(2,4,6-trimethylphenoxy)-6-qlycidoxy-1,3,6-triazin sowie Trialkylaminsalzen oder Tri-(Aryl substituierten Alkyl)Aminsalzen der Malein-oder Fumarsäure ausgewählt ist.

23. Die Zusammensetzung nach Anspruch 21 oder Anspruch 22, weiter ein Radialteleblock-Copolymer umfassend.

24. Eine thermoplastische Zusammensetzung, umfassend:
a) Polyphenylenätherharz
b) Polyamidharz,wobei besagtes Polyphenylenätherharz und besagtes Polyamidharz in besagter Zusammensetzung in einem Verhältnis von Polyphenylenätherharz zu Polyamidharz von 20:80 bis 80:20 anwesend ist;
c) eine wirksame Menge eines verträglichmachenden Mittels für Komponenten (a) und (b) und
d) ein lineares , getapertes Blockcopolymer, anwesend mit von 1 Gewichts-% bis 20 Gewichts-%, bezogen auf das Gewicht der gesamten Zusammensetzung, wobei besagtes lineares getapertes Blockcopolymer eine erste polymere vinylaromatische Endblockeinheit, eine zweite polymere vinylaromatische Endblockeinheit umfassen und besagte erste und zweite Endblockeinheiten dazwischen eine polymere vinylaromatischkonjugierte willkürliche Dieneinheit und eine polymere konjugierte Dienblockeinheit haben.

25. Die Zusammensetzung nach Anspruch 24, worin besagte Zusammensetzung im wesentlichen aus besagtem Polyphenylenätherharz, besagtem Polyamidharz, besagtem verträglichmachenden Mittel und besagtem linearen getapertem Blockcopolymer besteht.

26. Die Zusammensetzung nach Anspruch 1, worin besagtes lineares getapertes Blockcopolymer eine erste polymere vinylaromatische Endblockeinheit und eine zweite polymere vinylaromatische Endblockeinheit umfaßt, worin besagte erste und zweite Endblockeinheiten dazwischen eine polymere vinylaromatisch-konjugierte willkürliche Dieneinheit und eine polymere konjugierte Dienblockeinheit haben.

## Revendications

1. Composition thermoplastique comprenant :
(a) une résine de poly(oxyde de phénylène),
(b) une résine de polyamide,
(c) une quantité efficace d'un agent rendant compatibles les constituants (a) et (b), et
(d) un copolymère à blocs, linéaire, à dégressivité.

2. Composition selon la revendication 1, dans laquelle le poly(oxyde de phénylène) renferme plusieurs motifs de formule : 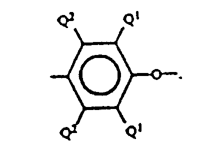 dans laquelle:
- chaque Q¹ représente indépendamment un atome d'halogène, un groupe alkyle inférieur primaire ou secondaire, un groupe phényle, un groupe halogénoalkyle, un groupe aminoalkyle, un groupe hydrocarbonoxy, ou un groupe halogénohydrocarbonoxy dans lequel au moins deux atomes de carbone séparent les atomes d'halogène et d'oxygène, et
- chaque Q² représente indépendamment un atome d'hydrogène ou d'halogène, un groupe alkyle inférieur primaire ou secondaire, un groupe phényle, un groupe halogénoalkyle, un groupe hydrocarbonoxy ou un groupe halogénohydrocarbonoxy tel que défini pour Q¹.

3. Composition selon la revendication 1 ou 2, dans laquelle le poly(oxyde de phénylène) est un poly(oxyde de 2,6-diméthyl-1,4-phénylène).

4. Composition selon la revendication 1 ou 2, pour laquelle le poly(oxyde de phénylène) est issu d'un monomère choisi dans le groupe constitué du 2,6-diméthylphénol, du 2,3,6-triméthylphénol et de leurs mélanges.

5. Composition selon l'une quelconque des revendications précédentes, pour laquelle le polyamide est choisi dans le groupe consisué du polyamide-6, du polyamide-6,6, du polyamide-11, du polyamide-12, du polyamide-6,3, du polyamide-6,4, du polyamide-4,6, du polyamide-6,10, du polyamide-6,12, des mélanges quelconques des précédents et des copolymères quelconques des précédents.

6. Composition selon l'une quelconque des revendications précédentes, pour laquelle l'agent compatibilisant représentant le constituant (c) est choisi dans le groupe constitué de :
(i) les composés qui contiennent à la fois :
(I) une double liaison éthylénique carbone-carbone ou une triple liaison carbone-carbone, et
(II) un groupe acide carboxylique, anhydride d'acide, amide d'acide, imide, ester carboxylique, amine ou hydroxyle,
(ii) les polymères liquides de diène,
(iii) les composés époxy,
(iv) les acides polycarboxyliques ou leurs dérivés,
(v) les cires de polyoléfine oxydées,
(vi) les composés renfermant un groupe fonctionnel acyle,
(vii) les poly(oxyde de phénylène) modifiés par un composé contenant un groupe fonctionnel acyle,
(viii) les composés contenant un groupe époxytriazine ou les poly(oxyde de phénylène) modifiés par un composé contenant un groupe époxytriazine, et
(ix) les sels de trialkylamine ou les sels de tri(arylalkyl)amine.

7. Composition selon la revendication 6, pour laquelle l'agent compatibilisant est choisi dans le groupe constitué de l'hydrazide maléique, de l'anhydride maléique, de l'acide maléique, de l'acide fumarique et du maléimide.

8. Composition selon la revendication 6, pour laquelle l'agent compatibilisant est choisi dans le groupe constitué de l'anhydride chloroformylsuccinique, du chlorure d'acide de l'anhydride trimellitique, des poly(oxyde de phénylène) modifiés par le chlorure d'acide de l'anhydride trimellitique, du chlorure d'acide de l'acide téréphtalique, de la 2-chloro-4,6-diglycidoxy-1,3,5-triazine, de la 2-chloro-4-(n-butoxy)-6-glycidoxy-1,3,5-triazine et de la 2-chloro-4-(2,4,6-triméthylphénoxy)-6-glycidoxy-1,3,5-triazine.

9. Composition selon la revendication 6, pour laquelle l'acide polycarboxylique ou son dérivé (sous-constituant (iv)) est choisi dans le groupe constitué de l'acide malique, de l'acide citrique, des sels de l'un quelconque de ces acides et des hydrates de l'un quelconque de ces acides.

10. Composition selon l'une quelconque des revendications précédentes, dans laquelle le copolymère à blocs, à dégressivité (constituant d) comprend des blocs A¹ et B¹, A¹ étant au moins un bloc d'hydrocarbure aromatique vinylique polymérisé, et B¹ étant un bloc hydrogéné, partiellement hydrogéné ou non hydrogéné, issu d'au moins un diène conjugué polymérisé.

11. Composition selon la revendication 10, dans laquelle le bloc A¹ est issu d'un monomère choisi dans le groupe constitué du styrène, de l'α-méthylstyrène, du para-méthylstyrène, du vinyltoluène, du vinylxylène et des mélanges de tels monomères.

12. Composition selon la revendication 10, dans laquelle le bloc B¹ est issu d'un monomère choisi dans le groupe constitué du butadiène, de l'isoprène,de l'éthylène, du butylène, du 1,3-pentadiène, du 2,3-diméthylbutadiène et de leurs combinaisons.

13. Composition selon l'une quelconque des revendications précédentes, dans laquelle la proportion de constituant (d) présente est comprise dans l'intervalle allant de 1 % en poids à 20 % en poids par rapport au poids de la composition entière.

14. Composition selon l'une quelconque des revendications précédentes, dans laquelle la proportion de constituant (d) présente est comprise dans l'intervalle allant de 5 % en poids à 15 % en poids.

15. Composition selon l'une quelconque des revendications précédentes, dans laquelle le rapport en poids du constituant (a) au constituant (b) est compris dans l'intervalle allant de 70/30 à 30/70.

16. Composition selon l'une quelconque des revendications précédentes, qui renferme en outre une matière élastomère.

17. Composition selon la revendication 16, dans laquelle la matière élastomère est un copolymère à blocs, caractérisé par une structure A-B, A-B-A' ou (A-B)ₘ-x ou par un mélange de ces structures, A et A' représentant chacun un bloc d'hydrocarbure aromatique vinylique polymérisé, chaque B étant issu d'au moins un diène conjugué polymérisé, X désignant le radical d'un agent de couplage multifonctionnel, et m désignant un nombre entier égal à au moins 2.

18. Composition selon la revendication 17, dans laquelle la matière élastomère comprend des blocs de styrène et de polybutadiène ou de polyisoprène, et est hydrogénée, partiellement hydrogénée ou non hydrogénée.

19. Composition selon la revendication 18, dans laquelle la matière élastomère est un copolymère à blocs styrène-butadiène-styrène, un copolymère à blocs styrène-(éthylène-propylène) ou un copolymère à blocs styrène-(éthylène-butylène)-styrène.

20. Composition selon l'une quelconque des revendications précédentes, qui renferme en outre des quantités efficaces d'au moins un additif choisi dans le groupe constitué des agents retardant l'inflammation, des plastifiants, des stabilisants, des agents antistatiques, des charges, des agents de renforcement, des lubrifiants, des colorants, des matières colorantes, des pigments et des agents retardant le dégouttement.

21. Composition thermoplastique comprenant :
(I) un mélange de résine de poly(oxyde de phénylène) et de résine de polyamide, dont les constituants sont rendus compatibles,
(II) un copolymère à blocs, à dégressivité, linéaire,
(III) un élastomère choisi dans le groupe constitué des copolymères à blocs styrène-butadiène-styrène, des copolymères à blocs styrène-(éthylène-propylène) et des copolymères à blocs styrène-(éthylène-butylène)-styrène.

22. Composition selon la revendication 21, pour laquelle le poly(oxyde de phénylène) est issu d'un monomère choisi dans le groupe constitué du 2,6-diméthylphénol, du 2,3,6-triméthylphénol et de leurs mélanges, et le polyamide est choisi dans le groupe constitué du polyamide-6, du polyamide-6,6, du polyamide-11, du polyamide-12, du polyamide-6,3, du polyamide-6,4, du polyamide-4,6, du polyamide-6,10, du polyamide-6,12, des mélanges quelconques des précédents et des copolymères quelconques des précédents,
et dans laquelle les constituants du mélange sont rendus compatibles par l'utilisation d'un agent choisi dans le groupe constitué des polymères liquides de diène, des composés époxy, des cires de polyoléfine oxydées, du chlorure d'acide de l'anhydride trimellitique, de l'anhydride chloroformylsuccinique, du chlorure d'acide de l'acide téréphtalique, de l'acide malique, des sels ou hydrates de l'acide malique, de l'acide citrique, des sels ou hydrates de l'acide citrique, de l'acide fumarique, du maléimide, de l'hydrazide maléique, de l'anhydride maléique, de l'acide maléique, de la 2-chloro-4,6-diglycidoxy-1,3,5-triazine, de la 2-chloro-4-(n-butoxy)-6-glycidoxy-1,3,5-triazine, de la 2-chloro-4-(2,4,6-triméthylphénoxy)-6-glycidoxy-1,3,5-triazine, et des sels de trialkylamine ou de tri(arylalkyl)amine de l'acide maléique ou de l'acide fumarique.

23. Composition selon la revendication 21 ou 22, qui renferme en outre un copolymère télébloc radial.

24. Composition thermoplastique comprenant :
(a) une résine de poly(oxyde de phénylène),
(b) une résine de polyamide, ladite résine de poly(oxyde de phénylène) et ladite résine de polyamide étant présentes dans ladite composition suivant un rapport de la résine de poly(oxyde de phénylène) à la résine de polyamide de 20:80 à 80:20,
(c) une quantité efficace d'un agent rendant compatibles les constituants (a) et (b), et
(d) un copolymère à blocs, à dégressivité, linéaire, présent à raison de 1 % en poids à 20 % en poids par rapport au poids de la composition totale, ledit copolymère à blocs, à dégressivité, linéaire, comprenant un premier bloc terminal polymère de composé aromatique vinylique et un second bloc terminal polymère de composé aromatique vinylique, lesdits premier et second blocs terminaux étant séparés par un bloc polymère statistique de composé aromatique vinylique et de diène conjugué et un bloc polymère de diène conjugué.

25. Composition selon la revendication 24, qui est constituée essentiellement de ladite résine de poly(oxyde de phénylène), de ladite résine de polyamide, dudit agent compatibilisant et dudit copolymère à blocs, à dégressivité, linéaire.

26. Composition selon la revendication 1, dans laquelle ledit copolymère à blocs, à dégressivité, linéaire, comprend un premier bloc terminal polymère de composé aromatique vinylique et un second bloc terminal polymère de composé aromatique vinylique, lesdits premier et second blocs terminaux étant séparés par un bloc polymère statistique de composé aromatique vinylique et de diène conjugué et un bloc polymère de diène conjugué.
